# EUROPÄISCHE PATENTSCHRIFT

(11) **EP 3 137 802 B1**
(45) Veröffentlichungstag und Bekanntmachung des Hinweises auf die Patenterteilung: **02.12.2020**
(21) Anmeldenummer: 15744850.7
(22) Anmeldetag: 30.04.2015
(51) Int. Cl.: F16L 3/00, B01F 3/04, C02F 3/20

(54) **BELÜFTER MIT MONTAGEVORRICHTUNG**
AERATOR WITH MOUNTING DEVICE
AÉRATEUR AVEC DISPOSITIF DE MONTAGE

(30) Priorität: 02.05.2014 AT 5006714 U
(43) Veröffentlichungstag der Anmeldung: 08.03.2017
(73) Patentinhaber: Aquaconsult Anlagenbau GmbH, 2514 Traiskirchen (AT)
(72) Erfinder: GLANINGER, Gerald, 2391 Kaltenleutgeben (AT); LUGMAIR, Robert, 2353 Guntramsdorf (AT); KÖBERL, Josef, 3160 Traisen (AT)
(74) Vertreter: Sonn & Partner Patentanwälte
(86) Internationale Anmeldenummer: PCT/AT2015/050108
(87) Internationale Veröffentlichungsnummer: WO 2015/164900

(56) Entgegenhaltungen:
- EP-A1- 1 107 413
- AT-A1- 506 717
- DE-B- 1 266 567
- DE-C1- 19 645 781
- JP-U- H01 132 299
- US-A- 4 408 742

## Beschreibung

Die Erfindung betrifft einen Belüfter.

Aus der AT 506 717 ist ein Belüfter bekannt, mit welchem, zur biologischen Reinigung von Abwässern, Gasbläschen in ein Klär- bzw. Abwasserbecken eingetragen werden. Bei der Begasung oder Belüftung der Abwässer kommt es darauf an, den zugeführten gasförmigen Sauerstoff in Form von feinen Gasbläschen den Abwässern zuzuführen, um eine möglichst große Austauschfläche zwischen den Gasbläschen und dem Abwasser zu schaffen. Dazu weist der Belüfter eine Membran mit kleinen Durchtrittsöffnungen auf, mit welchen die Gasbläschen an das Abwasser abgegeben werden. Die Membran wird mit Hilfe von Verriegelungskörpern in nuförmigen Aufnahmen an den Seitenbereichen eines plattenförmigen Grundkörpers befestigt. Der Grundkörper weist Seitenteile auf, welche nach außen gedrückt werden können, um die Membran mit den Verriegelungskörpern aus den Klemmnuten zu entnehmen.

In den CH 532 532 A, DE 196 45 781 C1, DE 88 07 929 U1 und EP 0 806 400 A1 werden andersartige Belüftereinrichtungen beschrieben.

Die EP 1 107 413 A1 zeigt eine Kabelaufnahmevorrichtung, bei welcher eine Halteeinrichtung verwendet wird.

Aus der DE 12 66 567 B ist eine Schelle zur Befestigung von Rohren bekannt, mit einer Basis und einem Bügel, welcher zum Festklemmen des Rohres in die Basis eingehakt wird.

Die US 4,408,742 A beschreibt eine Halteeinrichtung für ein Regenrohr, wobei gegenüberliegende Haltearme vorgesehen sind.

Die JP H01 132299 zeigt eine Halteeinrichtung für ein rundes Belüftungselement, wobei die Halteeinrichtung Griffelemente zum Lösen der Verbindung aufweist.

Um die Belüftervorrichtung am Boden des Klärbeckens zu befestigen, ist die Grundplatte beim Stand der Technik an der Unterseite mit einer Montageplatte verbunden. Der Grundkörper weist dafür horizontale, nach innen vorspringende Halteflansche auf, welche im montierten Zustand von entsprechenden Auslegern der Montageplatte hintergriffen werden. Die Montageplatte wird an gegenüberliegenden Seiten mit dem Boden des Klärbeckens verschraubt. Diese Montagevorrichtung funktioniert grundsätzlich zuverlässig, soll jedoch weiter verbessert werden.

Demnach besteht die Aufgabe der vorliegenden Erfindung darin, einen konstruktiv einfachen, kostengünstig zu fertigenden Belüfter der eingangs angeführten Art zu schaffen, mit welchem die Montage des Belüftungselementes weiter vereinfacht werden kann.

Diese Aufgabe wird durch einen Belüfter mit einer Montagevorrichtung, wie in Anspruch 1 angegeben, gelöst. Bevorzugte Ausführungsformen sind in den abhängigen Ansprüchen enthalten.

Erfindungsgemäß weist das Montageelement zumindest einen elastisch auslenkbaren Haltesteg zur lösbaren Verbindung mit der zumindest einen Seitenwand des Grundkörpers des Belüftungselementes auf, wobei der Haltesteg (10) am freien Ende mit einem Griffelement (15) zum Auslenken des Haltesteges (10) verbunden ist. Erfindungsgemäß ist außerdem die hochragende Seitenwand in der Betriebsstellung im Wesentlichen vertikal.

Bei der Montage des Belüftungselementes kann der Haltesteg elastisch nach außen gedrückt werden, um die Anordnung des Belüftungselementes in dem Montageelement zu ermöglichen. Nach Beendigung der Belastung kehrt der Haltesteg aufgrund seiner Eigenelastizität in die Ausgangs- bzw. Ruhestellung zurück, wobei das Belüftungselement formschlüssig innerhalb des Montageelementes gehalten wird. Demnach sind der Grundkörper des Belüftungselementes und der Haltesteg des Montageelementes über eine Schnappverbindung miteinander verbindbar. Dadurch kann der Aufwand für die Montage des Belüftungselementes besonders gering gehalten werden. Besonders bevorzugt ist dabei, wenn das Belüftungselement werkzeuglos zwischen den Haltestegen des Montageelementes montierbar ist. Vorteilhafterweise ist es zudem einfach möglich, dass das Belüftungselement aus dem im Klärbecken verankerten Montageelement entfernt wird. Zu diesem Zweck kann der Haltesteg des Montageelementes elastisch nach außen gedrückt werden, woraufhin das Belüftungselement aus dem Montageelement gehoben werden kann. Weiters ist es vorteilhaft, dass der elastisch verformbare Haltesteg mit geringerem Fertigungsaufwand als die beim Stand der Technik vorgesehene Montagevorrichtung verbunden ist. Darüber hinaus kann die Stabilität des Belüfters erhöht werden.

Um das Belüftungselement auf einfache Weise mit der Montagevorrichtung verbinden und bei Bedarf wieder aus der Montagevorrichtung entfernen zu können, ist es günstig, wenn das Montageelement zwei Haltestege zur lösbaren Verbindung mit gegenüberliegenden Seitenwänden des Grundkörpers des Belüftungselementes aufweist, wobei die zwei Haltestege über einen in einem Klärbecken befestigbaren Befestigungsabschnitt miteinander verbunden sind. Demnach kann die Montagevorrichtung über den Befestigungsabschnitt in dem Klärbecken, beispielsweise am Boden des Klärbeckens oder an einem Gestell innerhalb des Klärbeckens, montiert werden. Aufgrund der biegsamen Ausführung zumindest eines der Haltestege des Montageelementes kann das Belüftungselement lösbar an der Montagevorrichtung montiert werden. Zu diesem Zweck kann das Belüftungselement zunächst in einer gekippten Zwischenstellung in dem Montageelement angeordnet werden, woraufhin das Belüftungselement in seine Betriebsstellung gedrückt werden kann. Durch den Kontakt mit dem Grundkörper wird der zugehörige Haltesteg aus der Ausgangsstellung elastisch nach außen verschwenkt, bis das Belüftungselement in die montierte Betriebsstellung gleitet. Der verformte Haltesteg kehrt danach in seine Ausgangsstellung zurück, wodurch das Belüftungselement in dem Montageelement fixiert wird. Bei dieser Ausführung sind daher die Übergangsbereiche zwischen dem Befestigungsabschnitt und den Haltestegen als Gelenke ausgebildet, welche eine Auslenkung der Haltestege ermöglichen. Um das Belüftungselement aus der Montagevorrichtung zu entfernen, wird zumindest einer der Haltestege des Montageelementes so weit elastisch verformt, dass die Verbindung zwischen dem Grundkörper des Belüftungselementes und dem Montageelement gelöst wird. Bei dieser Ausführungsform ist zudem vorteilhaft, dass das Belüftungselement im montierten Betriebszustand besonders stabil zwischen den gegenüberliegenden Haltestegen des Montageelementes gehalten ist.

Um das Belüftungselement im montierten Betriebszustand einerseits in Querrichtung und andererseits in vertikaler Richtung zu fixieren, ist es von Vorteil, wenn der Haltesteg einen Begrenzungsabschnitt zur Anordnung an einer Außenfläche der Seitenwand und zumindest einen von dem Begrenzungsabschnitt nach innen ragenden Halteabschnitt aufweist. Bevorzugt ist der Begrenzungsabschnitt, bezogen auf den montierten Betriebszustand, im Wesentlichen vertikal angeordnet. Der Halteabschnitt ist bevorzugt in einem Winkel zu dem Begrenzungsabschnitt angeordnet. Vorzugsweise ist der Halteabschnitt, bezogen auf den montierten Betriebszustand, im Wesentlichen horizontal angeordnet. Durch den Begrenzungsabschnitt wird der Grundkörper des Belüftungselementes im montierten Betriebszustand seitlich gehalten. Der Halteabschnitt bewirkt zudem, dass das Belüftungselement im montierten Betriebszustand gegen eine entsprechende vertikale Verschiebung gesichert ist. Andererseits ist es jedoch günstig, wenn der Begrenzungs- und der Halteabschnitt des Haltesteges dazu eingerichtet sind, eine Verschiebung des Belüftungselementes in dessen Längsrichtung zu ermöglichen. Bevorzugt liegt der Haltesteg des Montageelementes zumindest abschnittsweise an dem Grundkörper des Belüftungselementes an, sodass zum Verschieben des Belüftungselementes der Reibschluss zwischen dem Montageelement und dem Belüftungselement überwunden wird. Vorteilhafterweise kann so die Längsposition des Belüftungselementes innerhalb des Klär- bzw. Abwasserbeckens einfach angepasst werden.

Um eine Beweglichkeit des Belüftungselementes im montierten Betriebszustand sowohl nach oben als auch nach unten zu sperren, ist es vorteilhaft, wenn der Haltesteg einen oberen und einen unteren Halteabschnitt aufweist. Der obere und der untere Halteabschnitt wirken mit entsprechenden Kanten des Belüfter-Grundkörpers zusammen, um das Belüftungselement in Querrichtung, d.h. seitlich, sowie in vertikaler Richtung zu fixieren.

Gemäß einer bevorzugten Ausführung ist vorgesehen, dass der untere Halteabschnitt über einen, vorzugsweise im Wesentlichen parallel zum Begrenzungsabschnitt erstreckten, Verbindungsabschnitt mit dem Befestigungsabschnitt verbunden ist. Bei dieser Ausführung ist daher der untere Halteabschnitt oberhalb des Befestigungsabschnittes angeordnet, welcher die gegenüberliegenden Haltestege des Montageelementes miteinander verbindet. Durch den oberen und unteren Halteabschnitt wird in dem Haltesteg eine Ausbuchtung gebildet, in welcher die Seitenwand des Grundkörpers des Belüftungselementes anordenbar ist.

Gemäß einer alternativen Ausführung ist vorgesehen, dass der untere Halteabschnitt als Bereich des Befestigungsabschnitts ausgebildet ist. Bei dieser Ausführung wird daher die Seitenwand des Belüftungselementes im montierten Betriebszustand zwischen dem oberen Halteabschnitt und dem seitlichen Bereich des Befestigungsabschnittes des Montageelementes gehalten.

Aus fertigungstechnischen Gründen ist es besonders günstig, wenn das Montageelement durch ein einteiliges Profilteil gebildet ist. Diese Ausführung zeichnet sich durch geringe Fertigungskosten aus. Das Profilteil weist eine in Längsrichtung des Belüftungselementes gleichbleibende Querschnittsform auf. Bevorzugt ist das Profilteil aus Stahl gefertigt. Alternativ kann eine Ausführung aus Kunststoff oder faserverstärktem Kunststoff vorgesehen sein.

Um die Demontage des Belüftungselementes zu erleichtern, ist erfindungsgemäß der Haltesteg am freien Ende mit einem Griffelement zum Auslenken des Haltestegs verbunden. Zur Demontage des Belüftungselementes kann daher das Griffelement ergriffen werden, um den damit verbundenen Haltesteg nach außen zu biegen, sodass das Belüftungselement aus der Montagevorrichtung entnommen werden kann.

Darüber hinaus ist es aus Gründen der Stabilität günstig, wenn das Griffelement und der Haltesteg einteilig ausgebildet sind. Dadurch können zudem die Fertigungskosten niedrig gehalten werden.

Gemäß einer besonders einfach zu fertigenden Ausführungsform kann das Griffelement in derselben Ebene wie der Begrenzungsabschnitt des Haltesteges angeordnet sein. Bei dieser Ausführungsform bildet das Griffelement eine Fortsetzung bzw. Verlängerung des Begrenzungsabschnittes des Haltesteges.

Hinsichtlich des Fertigungsaufwandes besonders günstig ist es, wenn das Griffelement eine Ausnehmung aufweist, welche vorzugsweise entsprechend dem oberen Halteabschnitt geformt ist. Auf diese Weise kann der Halteabschnitt in der Fertigung aus dem Griffelement gebildet werden. Zu diesem Zweck können Schnitt- und Biegelinien in dem Montageelementvorgesehen sein, um den oberen Halteabschnitt auszubilden. In der Fertigung kann zunächst eine Schnittlinie in einem Ausgangsmaterial für das Griffelement erzeugt werden, woraufhin ein daran angrenzender Abschnitt des Griffelements zur Ausbildung des oberen Halteabschnittes gebogen werden kann.

In einer bevorzugten Ausführung ist die Ausnehmung des Griffelements abschnittsweise durch eine Kante zwischen dem oberen Halteabschnitt und dem Begrenzungsabschnitt des Haltesteges begrenzt. Bei dieser Ausführung liegt der obere Halteabschnitt im montierten Zustand flächig an der Oberseite der Seitenwand des Belüftungselements an. Bevorzugt ist der obere Halteabschnitt im Wesentlichen halbkreisförmig oder trapezförmig. Die Schnittlinie kann bei dieser Ausführung der Begrenzungslinie des im Wesentlichen halbkreisförmigen oder trapezförmigen oberen Halteabschnitts entsprechen.

In einer weiteren, besonders einfach zu fertigenden Ausführung weist das Griffelement eine im Wesentlichen geradlinige Schnittlinie auf, wobei ein daran angrenzender Abschnitt des Griffelements zur Ausbildung des oberen Halteabschnitts nach innen gebogen ist. Bei dieser Ausführung liegt der obere Halteabschnitt im montierten Zustand über dessen Unterkante an der Oberseite der Seitenwand des Belüftungselements an. Die Unterkante des oberen Halteabschnitts weist vorzugsweise einen im Wesentlichen halbkreisförmigen oder trapezförmigen Verlauf auf. Zwischen der Unterkante des Halteabschnitts und der im Wesentlichen geradlinigen Schnittlinie am Griffelement kann ein vorzugsweise in einer horizontalen Ebene erstreckter Freiraum ausgebildet sein, welcher mit der entsprechend dem Halteabschnitt geformten, vorzugsweise in einer vertikalen Ebene erstreckten Ausnehmung des Griffelements verbunden ist.

Dementsprechend kann der Haltesteg eine weitere Ausnehmung aufweisen, welche entsprechend dem unteren Halteabschnitt des Haltesteges geformt ist.

Um die Handhabung der Montagevorrichtung bei der Montage des Belüftungselementes zu erleichtern, ist es vorteilhaft, wenn das Griffelement von dem Begrenzungsabschnitt des Haltesteges vorzugsweise nach außen abgewinkelt ist.

Die Ausgestaltung des Montageelementes ermöglicht zudem, dass der Befestigungsabschnitt eine, vorzugsweise genau eine, Befestigungsöffnung zur Anordnung eines Befestigungselementes aufweisen kann. Vorteilhafterweise kann die Zahl der Befestigungsmittel gegenüber dem Stand der Technik reduziert werden.

Um die Anordnung des Belüftungselementes innerhalb des Klärbeckens mit geringem Aufwand anpassen zu können, ist es günstig, wenn der Grundkörper des Belüftungselementes in Längsrichtung verschieblich zwischen den Haltestegen des Montageelementes angeordnet ist. Zum Verschieben des Belüftungselementes ist es daher vorzugsweise lediglich erforderlich, den Reibschluss zwischen dem Montageelement und dem Belüftungselement zu überwinden.

Gemäß einer bevorzugten Ausführung weist der Grundkörper in einem seitlichen Randbereich eine Klemmnut zum Festklemmen eines Membranelementes mit Durchtrittsöffnungen für das Gas auf, wobei die Klemmnut außenseitig durch die Seitenwand begrenzt ist.

Die Erfindung wird nachstehend anhand von in der Zeichnung dargestellten, bevorzugten Ausführungsbeispielen, auf die sie jedoch nicht beschränkt sein soll, noch weiter erläutert. Im Einzelnen zeigen in der Zeichnung:
Fig. 1a eine schaubildliche Ansicht eines erfindungsgemäßen Belüfters, wobei ein Belüftungselement zum Einbringen eines Gases in eine Flüssigkeit in einem im Wesentlichen U-förmigen Montageelement mit elastisch verformbaren Haltestegen montiert ist;
Fig. 1b eine schaubildliche Ansicht des Belüfters gemäß Fig. 1a, jedoch mit einer abgewandelten Ausführung des Montageelementes;
Fig. 2a eine Querschnittsansicht eines erfindungsgemäßen Belüfters mit einem von Fig. 1 verschiedenen Belüftungselement, wobei schematisch eine perforierte Membran in einem an einer Grundplatte aufliegenden Ruhezustand und in einem von der Grundplatte abgehobenen Belüftungszustand dargestellt ist;
Fig. 2b eine Querschnittsansicht des Belüfters gemäß Fig. 1a;
Fig. 3a eine Ansicht der Montagevorrichtung für das Belüftungselement gemäß Fig. 2a;
Fig. 3b eine Ansicht der Montagevorrichtung für das Belüftungselement gemäß Fig. 1b;
Fig. 3c eine Ansicht einer alternativen Ausführung der Montagevorrichtung für das Belüftungselement gemäß Fig. 2b;
Fig. 4a bis Fig. 4d schematisch die einzelnen Schritte bei der Montage des Belüftungselementes in dem Montageelement;
Fig. 5 eine Ansicht einer alternativen Ausführung einer Montagevorrichtung;
Fig. 6 eine Ansicht eines Belüfters mit der Montagevorrichtung gemäß Fig. 5; und
Fig. 7 schematisch eine alternative Ausführung einer Montagevorrichtung.

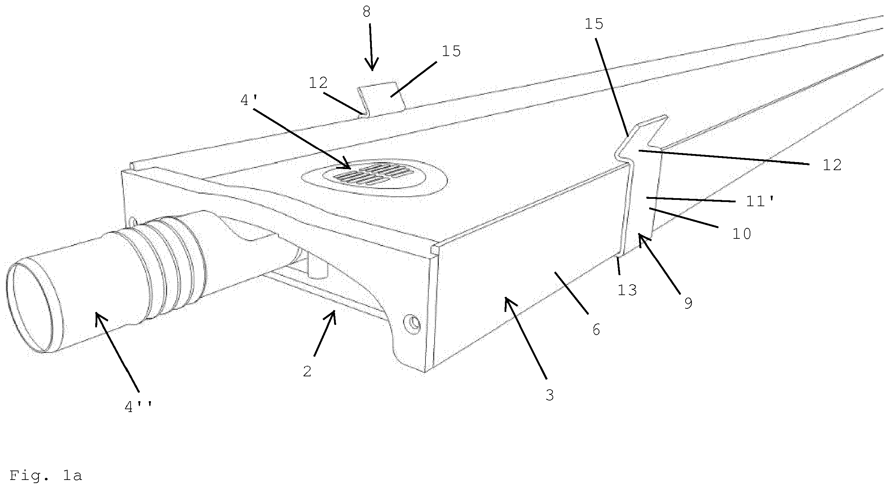

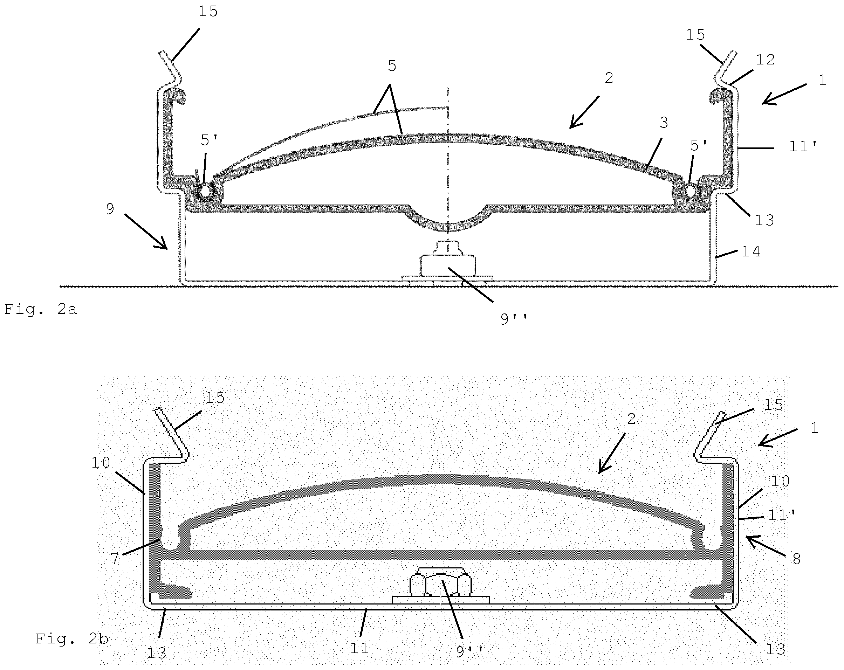

In Fig. 1a ist ein Belüfter 1 mit einem Belüftungselement 2 zum Einbringen eines Gases in eine Flüssigkeit gezeigt. Das Belüftungselement 2 weist einen langgestreckten Grundkörper 3 auf, welcher durch ein an sich bekanntes Profilteil, insbesondere aus Kunststoff, gebildet sein kann. Der Grundkörper 3 weist an der Oberseite eine gewölbte Grundplatte mit einer Gaszufuhröffnung 4' auf, welche mit einer Gaszuführeinrichtung 4" verbunden ist. Darüber hinaus weist das Belüftungselement 2 ein (in Fig. 2a schematisch ersichtliches) Membranelement 5 mit einer Vielzahl von Durchtrittsöffnungen für das Gas auf, um das Gas in der zu belüftenden Flüssigkeit, beispielsweise in einem Klärbecken, zu belüften. Durch Zufuhr des Gases wird das perforierte Membranelement ausgehend von dem in Fig. 2a mit strichlierter Linie eingezeichneten Ruhezustand auf der Grundplatte 3 in den mit einer durchgezogenen Linie angedeuteten Belüftungszustand von der Grundplatte 3 abgehoben. An den Seitenrändern weist das Belüftungselement 2 je eine hochragende, in der Betriebsstellung im Wesentlichen vertikale Seitenwand 6 auf, welche sich in Längsrichtung des Belüftungselementes 2 erstreckt. Der Grundkörper 3 weist an den seitlichen Randbereichen, benachbart der Seitenwände 6, je eine Klemmnut 7 zum Festklemmen von Randbereichen des Membranelementes 5 mittels Klemmkörpern 5' auf. Der Aufbau des Belüftungselementes 2 ist an sich aus der AT 506 717 bekannt, auf welche hiermit verwiesen werden kann.

Wie aus Fig. 1a weiters ersichtlich, weist der Belüfter 1 zudem eine Montagevorrichtung 8 zur Montage des Belüftungselementes 2 in dem Klärbecken auf. Die Montagevorrichtung 8 weist ein Montageelement 9 auf, welches in der gezeigten Ausführung zwei Haltestege 10 zur lösbaren Verbindung mit den Seitenwänden 6 des Grundkörpers 3 des Belüftungselementes 2 aufweist. Die Haltestege 10 sind biegsam, sodass das Belüftungselement 2 lösbar, über einen Formschluss in dem Montageelement 9, montierbar ist.

Wie aus Fig. 2a, 2b ersichtlich, sind die zwei gegenüberliegenden Haltestege 10 über einen in der Betriebsstellung horizontal angeordneten Befestigungsabschnitt 11 miteinander verbunden, welcher beispielsweise am Boden des Klärbeckens oder an einem Gestell innerhalb des Klärbeckens befestigt wird. Dafür weist der Befestigungsabschnitt 11 eine Befestigungsöffnung 9' zur Anordnung eines Befestigungselementes 9", beispielsweise einer Schraube, auf. Das Montageelement 9 mit den Haltestegen 10 und dem Befestigungsabschnitt 11 ist durch ein einteiliges Profilteil, vorzugsweise aus Stahl, gebildet.

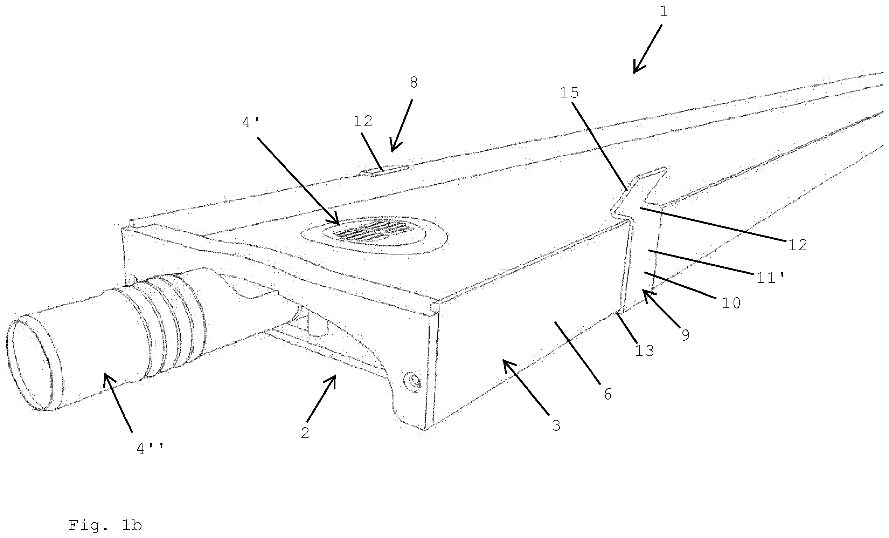

Wie aus Fig. 1a, 1b, 2a, 2b weiters ersichtlich, weist jeder Haltesteg 10 einen Begrenzungsabschnitt 11' zur Anordnung an der von der Klemmnut 7 abgewandten Außenfläche der Seitenwand 6 auf, welcher jeweils von einem oberen 12 und einem unteren Halteabschnitt 13 begrenzt wird. Durch die Halteabschnitte 12, 13 wird das Belüftungselement 2 in Höhenrichtung fixiert. Die Begrenzungsabschnitte 11' der Haltestege 10 bewirken eine seitliche Fixierung des Belüftungselementes 2. Andererseits ist der Grundkörper 3 des Belüftungselementes 2 in dessen Längsrichtung verschieblich zwischen den Haltestegen 10 des Montageelementes 9 angeordnet.

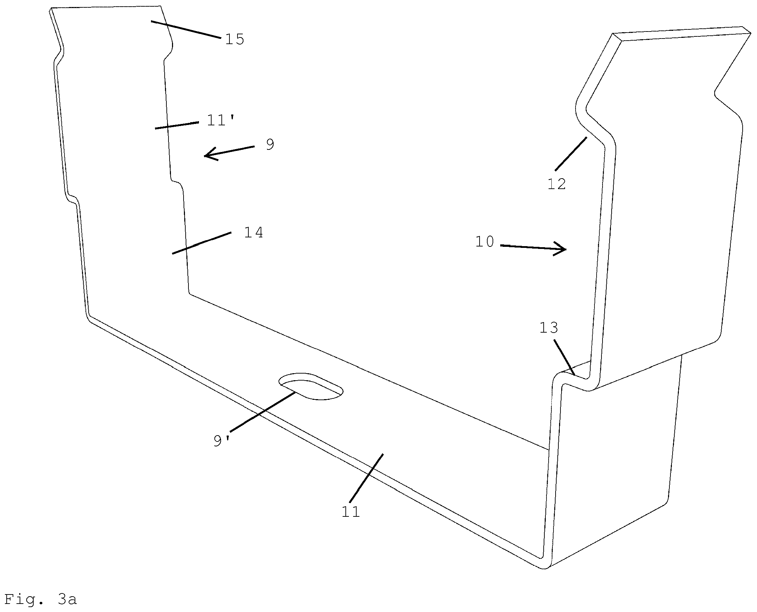

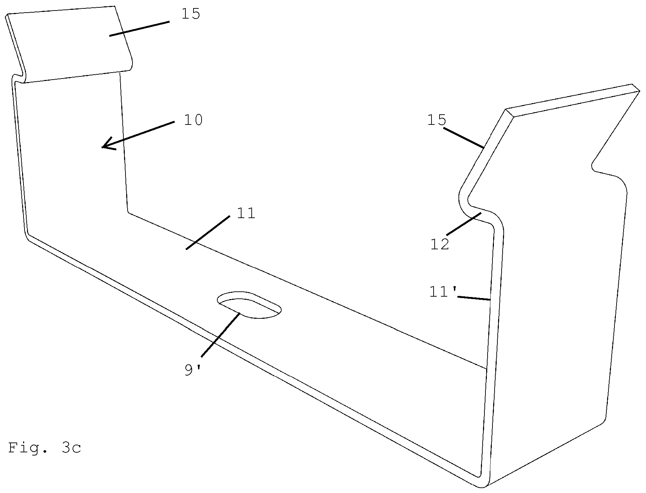

In der Ausführung des Montageelementes 9 gemäß Fig. 2a und Fig. 3a ist der untere Halteabschnitt 13 über einen, im Wesentlichen parallel zum Begrenzungsabschnitt 11' erstreckten, im Betrieb im Wesentlichen vertikal angeordneten Verbindungsabschnitt 14 mit dem Befestigungsabschnitt 11 verbunden. Dadurch wird an der Unterseite des Belüftungselementes 2 ausreichend Platz geschaffen.

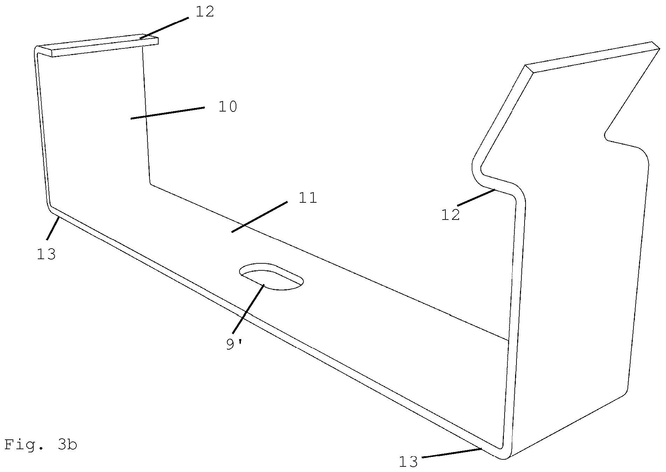

Wie aus Fig. 1a, 1b, 2a, 2b weiters ersichtlich, ist der Haltesteg 10 am freien, oberen Ende mit einem Griffelement 15 zum elastischen Auslenken des Haltesteges 10 verbunden. Das Griffelement 15 und der Haltesteg 10 sind einteilig ausgebildet. In der gezeigten Ausführung ist das Griffelement 15 in einem Winkel zu dem Begrenzungsabschnitt 11' des Haltesteges 10 angeordnet, um die Handhabung der Montagevorrichtung 8 zu erleichtern. Das Montageelement 9 kann an beiden Haltestegen 10 ein Griffelement 15 aufweisen (vgl. Fig. 1a, 2a, 2b, 3a, 3c). Alternativ kann das Montageelement 9 nur an einem der beiden Haltestege 10 ein solches Griffelement 15 aufweisen (vgl. Fig. 1b, 3b).

In Fig. 2b, vgl. auch Fig. 1a, 1b, ist eine Ausführungsform des Belüftungselementes 2 gezeigt, welche in der Form des Grundkörpers 2 dem Belüfter der AT 506 717 entspricht. Bei dieser Ausführung des Montageelementes 9 ist der untere Halteabschnitt 12 des Haltesteges 10 als Bereich des Befestigungsabschnittes 11 ausgebildet.

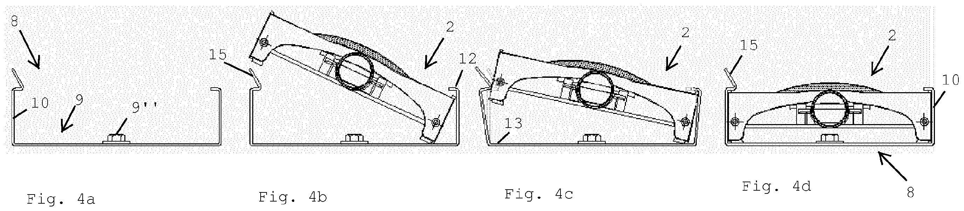

In den Fig. 4a bis Fig. 4d sind schematisch die einzelnen Schritte bei der Montage des Belüftungselementes 2 in dem Montageelement 9 ersichtlich. Gemäß Fig. 4a wird das Montageelement 9 in dem Klärbecken montiert. Danach wird das Belüftungselement 2 in das Montageelement 9 eingesetzt, wobei die eine (im Bild rechte) Seite des Grundkörpers 3 unterhalb des oberen Halteabschnittes 12 des einen Montageelementes 9 angeordnet wird. Danach wird das Belüftungselement 2 nach unten gedrückt, wobei der Haltesteg 10 des anderen Montageelementes 9 elastisch nach außen gelenkt wird. Der Übergangsbereich zwischen dem Haltesteg 10 und dem Befestigungsabschnitt 11 ist dabei als Gelenk ausgebildet, welches eine Verschwenkung des Haltesteges 10 aus der mit strichlierten Linien skizzierten Ruhestellung nach außen in die mit durchgezogenen Linien dargestellte Schwenkstellung ermöglicht. Dadurch kann das Belüftungselement 2 unter den oberen Halteabschnitt 12 des Haltesteges 10 gleiten. Durch die Eigenelastizität des Materials des Montageelementes 9 kehrt der Haltesteg 10 danach in seine Ruhe- bzw. Ausgangsstellung zurück, wodurch die formschlüssige Verbindung zwischen dem Belüftungselement 2 und dem Montageelement 9 hergestellt wird (Fig. 4d). Durch Betätigung des Griffelementes 15 kann der Haltesteg nach außen gedrückt werden, um das Belüftungselement 2 aus der Montagevorrichtung 8 zu entnehmen.

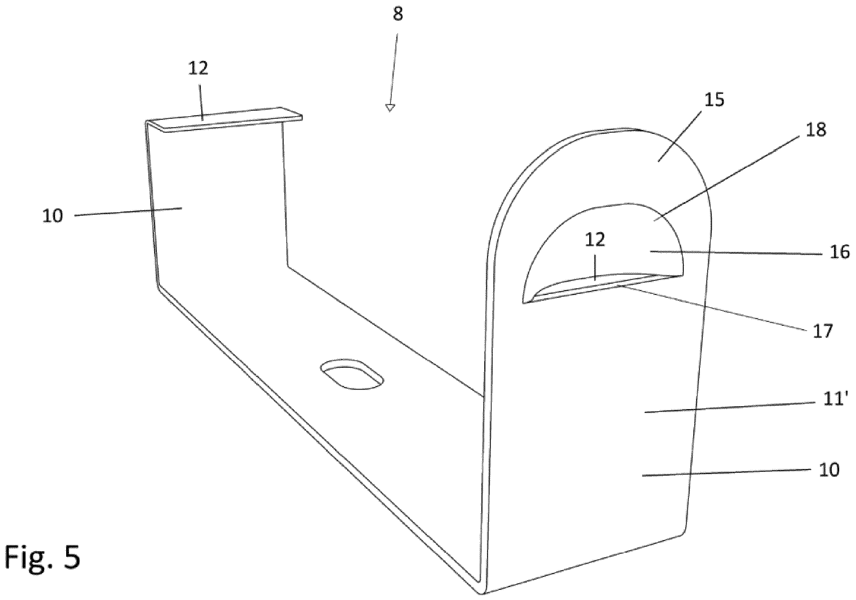

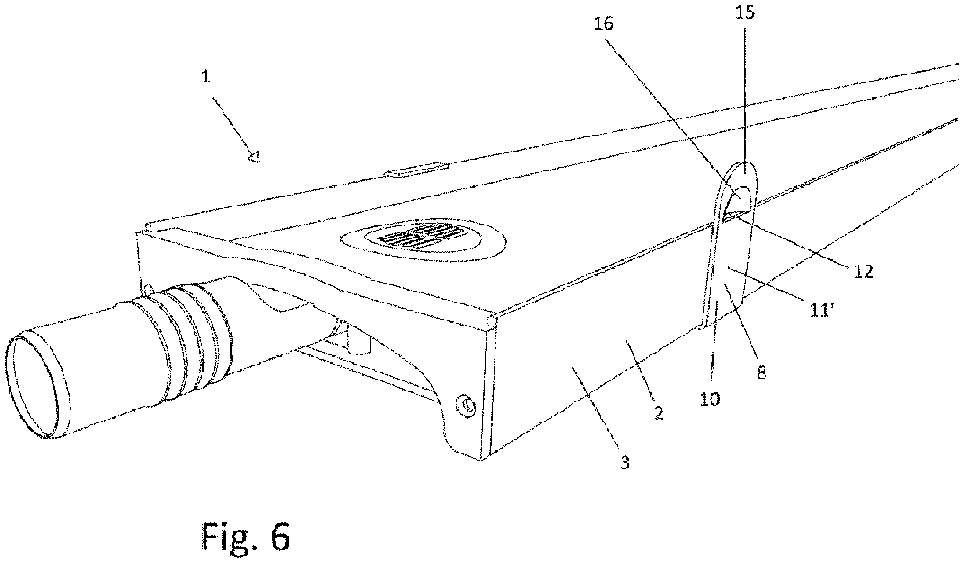

In Fig. 5 ist eine alternative Ausführung der Montagevorrichtung 8 zur Montage des Belüftungselementes 2 in dem Klärbecken ersichtlich. In Fig. 6 ist der Belüfter 1 samt der Montagevorrichtung 8 der Fig. 5 dargestellt. Das Montageelement 9 weist zwei Haltestege 10 zur lösbaren Verbindung mit den Seitenwänden 6 des Grundkörpers 3 des Belüftungselementes 2 auf. In der gezeigten Ausführung ist einer der Haltestege 10 mit einem Griffelement 15 verbunden, welches im montierten Betriebszustand über das Belüftungselement 2 nach oben vorsteht. Somit kann das Griffelement 15 zum elastischen Auslenken des Haltesteges 10 betätigt werden. Selbstverständlich können jedoch auch beide Haltestege 10 mit je einem Griffelement 15 verbunden sein. Das Griffelement 15 und der Haltesteg 10 sind wie bei den vorangehenden Ausführungen einteilig ausgebildet. Im Unterschied dazu ist das Griffelement 15 jedoch durch eine Verlängerung bzw. Fortsetzung des im montierten Betriebszustand insbesondere vertikalen Begrenzungsabschnittes 11' des Haltesteges 10 gebildet. Dadurch ist das Griffelement 15 in derselben Ebene wie der Begrenzungsabschnitt 11' des Haltesteges 10 angeordnet. Zur Ausbildung des im montierten Betriebszustand im Wesentlichen horizontal angeordneten oberen Halteabschnittes 12 des Haltesteges 10 weist das Griffelement 15 eine Ausnehmung 16 auf, welche entsprechend dem oberen Halteabschnitt 12 geformt ist. Die Ausnehmung 16 wird unterseitig durch eine Kante 17 zwischen dem oberen Halteabschnitt 12 und dem Begrenzungsabschnitt 11' des Haltesteges 10 begrenzt. In der gezeigten Ausführung ist der obere Halteabschnitt 12 im Wesentlichen trapezförmig. Oberseitig ist die Ausnehmung 16 durch eine Biegelinie 18 begrenzt. In der Fertigung wird eine dem oberen Halteabschnitt 12 entsprechende Schnittlinie 19 vorgesehen, woraufhin die Biegelinie 18 in dem den Haltesteg 10 verlängernden Griffelement 15 ausgebildet.

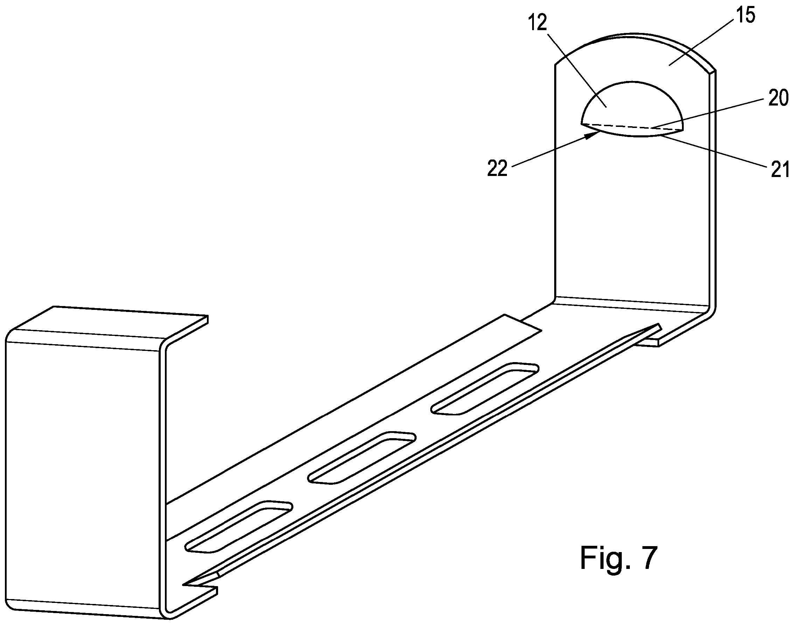

Fig. 7 zeigt schematisch eine weitere Ausführung des Montageelements 9. Bei dieser Ausführung weist das Griffelement 15 eine im Wesentlichen geradlinige Schnittlinie 20 auf, wobei ein daran angrenzender Abschnitt des Griffelements zur Ausbildung des oberen Halteabschnitts 12 nach innen gebogen ist. Bei dieser Ausführung liegt der obere Halteabschnitt 12 im montierten Zustand über dessen Unterkante 21 an der Oberseite der Seitenwand 6 des Belüftungselements 2 an. Die Unterkante 21 des oberen Halteabschnitts weist in der gezeigten Ausführung einen im Wesentlichen trapezförmigen Verlauf auf. Zwischen der Unterkante 21 des oberen Halteabschnitts 12 und der im Wesentlichen geradlinigen Schnittlinie 20 am Griffelement 15 ist ein horizontaler Freiraum 22 vorgesehen, welcher mit der entsprechend dem oberen Halteabschnitt 12 geformten, in einer vertikalen Ebene erstreckten Ausnehmung 16 des Griffelements 15 verbunden ist. Diese Ausführung zeichnet sich durch eine besonders einfache Fertigung aus.

Wie aus Fig. 7 weiters ersichtlich, weist das Montageelement 9 bei dieser Ausführung am Befestigungsabschnitt 11 nach oben gebogene Längsränder auf, mit welchen die Steifigkeit des Montageelements 9 erhöht wird.

## Patentansprüche

1. Belüfter (1) mit einem Belüftungselement (2) zum Einbringen eines Gases in eine Flüssigkeit, wobei das Belüftungselement (2) einen Grundkörper (3) mit zumindest einer hochragenden Seitenwand (6) aufweist, und mit einer Montagevorrichtung (8) zur Montage des Belüftungselementes (2) insbesondere in einem Klärbecken, wobei die Montagevorrichtung (8) ein Montageelement (9) zur Verbindung mit der Seitenwand (6) des Grundkörpers (3) des Belüftungselementes (2) aufweist, wobei das Montageelement (9) zumindest einen elastisch auslenkbaren Haltesteg (10) zur lösbaren Verbindung mit der zumindest einen Seitenwand (6) des Grundkörpers (3) des Belüftungselementes (2) aufweist, wobei der Haltesteg (10) am freien Ende mit einem Griffelement (15) zum Auslenken des Haltesteges (10) verbunden ist und wobei die hochragende Seitenwand (6) sich in Längsrichtung des Belüftungselementes (2) erstreckt und in der Betriebsstellung im Wesentlichen vertikal ist.

2. Belüfter (1) nach Anspruch 1, **dadurch gekennzeichnet, dass** das Montageelement (9) zwei Haltestege (10) zur lösbaren Verbindung mit gegenüberliegenden Seitenwänden (6) des Grundkörpers (3) des Belüftungselementes (2) aufweist, wobei die zwei Haltestege (10) über einen in einem Klärbecken befestigbaren Befestigungsabschnitt (11) miteinander verbunden sind.

3. Belüfter (1) nach Anspruch 1 oder 2, **dadurch gekennzeichnet, dass** der Haltesteg (10) einen Begrenzungsabschnitt (11') zur Anordnung an einer Außenfläche der Seitenwand (6) und zumindest einen von dem Begrenzungsabschnitt (11') nach innen ragenden Halteabschnitt (12, 13) aufweist.

4. Belüfter (1) nach Anspruch 3, **dadurch gekennzeichnet, dass** der Haltesteg (10) einen oberen (12) und einen unteren Halteabschnitt (13) aufweist.

5. Belüfter (1) nach Anspruch 4, **dadurch gekennzeichnet, dass** der untere Halteabschnitt (13) über einen vorzugsweise im Wesentlichen parallel zum Begrenzungsabschnitt (11') erstreckten Verbindungsabschnitt (14) mit dem Befestigungsabschnitt (11) verbunden ist.

6. Belüfter (1) nach Anspruch 4, **dadurch gekennzeichnet, dass** der untere Halteabschnitt (13) als Bereich des Befestigungsabschnittes (11) ausgebildet ist.

7. Belüfter (1) nach einem der Ansprüche 1 bis 6, **dadurch gekennzeichnet, dass** das Montageelement (9) durch ein einteiliges Profilteil gebildet ist.

8. Belüfter (1) nach einem der Ansprüche 1 bis 7, **dadurch gekennzeichnet, dass** das Griffelement (15) und der Haltesteg (10) einteilig ausgebildet sind.

9. Belüfter (1) nach einem der Ansprüche 1 bis 8, **dadurch gekennzeichnet, dass** das Griffelement (15) in derselben Ebene wie der Begrenzungsabschnitt (11') des Haltesteges (10) angeordnet ist.

10. Belüfter (1) nach einem der Ansprüche 1 bis 9, **dadurch gekennzeichnet, dass** das Griffelement (15) eine Ausnehmung (16) aufweist, welche vorzugsweise entsprechend dem oberen Halteabschnitt (12) geformt ist.

11. Belüfter (1) nach einem der Ansprüche 1 bis 10, **dadurch gekennzeichnet, dass** das Griffelement (15) eine im Wesentlichen geradlinige Schnittlinie (20) aufweist, wobei ein daran angrenzender Abschnitt des Griffelements (15) zur Ausbildung des oberen Halteabschnitts (12) nach innen gebogen ist, wobei der obere Halteabschnitt (12) im montierten Zustand über dessen Unterkante (21) an der Oberseite der Seitenwand (6) des Belüftungselements (2) anliegt.

12. Belüfter (1) nach einem der Ansprüche 1 bis 8, **dadurch gekennzeichnet, dass** das Griffelement (15) von dem Begrenzungsabschnitt (11') des Haltesteges (10) vorzugsweise nach außen abgewinkelt ist.

13. Belüfter (1) nach einem der Ansprüche 1 bis 12, **dadurch gekennzeichnet, dass** der Befestigungsabschnitt (11) eine, vorzugsweise genau eine, Befestigungsöffnung (9') zur Anordnung eines Befestigungselementes (9") aufweist.

14. Belüfter (1) nach einem der Ansprüche 1 bis 13, **dadurch gekennzeichnet, dass** der Grundkörper (3) des Belüftungselementes (2) in Längsrichtung verschieblich zwischen den Haltestegen (10) des Montageelementes (9) angeordnet ist.

15. Belüfter (1) nach einem der Ansprüche 1 bis 14, **dadurch gekennzeichnet, dass** der Grundkörper (3) in einem seitlichen Randbereich eine Klemmnut (7) zum Festklemmen eines Membranelementes (5) mit Durchtrittsöffnungen für das Gas aufweist, wobei die Klemmnut (7) außenseitig durch die Seitenwand (6) begrenzt ist.

## Claims

1. Aerator (1) comprising an aeration element (2) for introducing a gas into a liquid, wherein the aeration element (2) has a main body (3) having at least one upwardly-projecting side wall (6), and comprising a mounting device (8) for mounting the aeration element (2), in particular in a clarifying basin, wherein the mounting device (8) has a mounting element (9) for connecting to the side wall (6) of the main body (3) of the aeration element (2), wherein the mounting element (9) has at least one elastically deflectable retaining projection (10) for detachably connecting to the at least one side wall (6) of the main body (3) of the aeration element (2), wherein the retaining projection (10) is connected at the free end thereof to a grip element (15) for deflecting the retaining projection (10), and wherein the upwardly-projecting side wall (6) extends in the longitudinal direction of the aeration element (2) and is substantially vertical in the operating position.

2. Aerator (1) according to claim 1, **characterised in that** the mounting element (9) has two retaining projections (10) for detachably connecting to opposing side walls (6) of the main body (3) of the aeration element (2), the two retaining projections (10) being interconnected by a fastening portion (11) which can be fastened in a clarifying basin.

3. Aerator (1) according to either claim 1 or claim 2, **characterised in that** the retaining projection (10) has a limiting portion (11') for arranging on an outer surface of the side wall (6), and at least one retaining portion (12, 13) projecting inwardly from the limiting portion (11').

4. Aerator (1) according to claim 3, **characterised in that** the retaining projection (10) has an upper (12) and a lower retaining portion (13).

5. Aerator (1) according to claim 4, **characterised in that** the lower retaining portion (13) is connected to the fastening portion (11) by a connecting portion (14) which preferably extends substantially in parallel with the limiting portion (11').

6. Aerator (1) according to claim 4, **characterised in that** the lower retaining portion (13) is designed as a region of the fastening portion (11).

7. Aerator (1) according to any of claims 1 to 6, **characterised in that** the mounting element (9) is formed by a one-piece profile part.

8. Aerator (1) according to any of claims 1 to 7, **characterised in that** the grip element (15) and the retaining projection (10) are formed in one piece.

9. Aerator (1) according to any of claims 1 to 8, **characterised in that** the grip element (15) is arranged in the same plane as the limiting portion (11') of the retaining projection (10).

10. Aerator (1) according to any of claims 1 to 9, **characterised in that** the grip element (15) has a recess (16) which is preferably shaped in accordance with the upper retaining portion (12).

11. Aerator (1) according to any of claims 1 to 10, **characterised in that** the grip element (15) has a substantially straight line of intersection (20), a portion of the grip element (15) that is adjacent thereto being bent inwardly to form the upper retaining portion (12), the upper retaining portion (12), in the mounted state, resting on the upper side of the side wall (6) of the aeration element (2) over the lower edge (21) thereof.

12. Aerator (1) according to any of claims 1 to 8, **characterised in that** the grip element (15) is preferably angled outwardly from the limiting portion (11') of the retaining projection (10).

13. Aerator (1) according to any of claims 1 to 12, **characterised in that** the fastening portion (11) has one, preferably exactly one, fastening opening (9') for arrangement of a fastening element (9").

14. Aerator (1) according to any of claims 1 to 13, **characterised in that** the main body (3) of the aeration element (2) is arranged between the retaining projections (10) of the mounting element (9) so as to be displaceable in the longitudinal direction.

15. Aerator (1) according to any of claims 1 to 14, **characterised in that** the main body (3) has a clamping groove (7) in a lateral edge region for clamping a membrane element (5) having passage openings for the gas, the clamping groove (7) being delimited on the outside by the side wall (6).

## Revendications

1. Aérateur (1) avec un élément d'aération (2) destiné à introduire un gaz dans un liquide, dans lequel l'élément d'aération (2) présente un corps de base (3) avec au moins une paroi latérale (6) faisant saillie vers le haut, et avec un dispositif de montage (8) destiné au montage de l'élément d'aération (2) en particulier dans un clarificateur, dans lequel le dispositif de montage (8) présente un élément de montage (9) à relier à la paroi latérale (6) du corps de base (3) de l'élément d'aération (2), dans lequel l'élément de montage (9) présente au moins une ailette de retenue (10) pouvant dévier élastiquement, à relier de manière libérable à la au moins une paroi latérale (6) du corps de base (3) de l'élément d'aération (2), dans lequel l'ailette de retenue (10) est reliée par l'extrémité libre à un élément de préhension (15) pour dévier l'ailette de retenue (10) et dans lequel la paroi latérale (6) faisant saillie vers le haut s'étend dans la direction longitudinale de l'élément d'aération (2) et est sensiblement verticale dans la position de fonctionnement.

2. Aérateur (1) selon la revendication 1, **caractérisé en ce que** l'élément de montage (9) présente deux ailettes de retenue (10) à relier de manière libérable aux parois latérales (6) opposées du corps de base (3) de l'élément d'aération (2), dans lequel les deux ailettes de retenue (10) sont reliées l'une à l'autre par l'intermédiaire d'une partie de fixation (11) pouvant être fixée dans un clarificateur.

3. Aérateur (1) selon la revendication 1 ou 2, **caractérisé en ce que** l'ailette de retenue (10) présente une partie de délimitation (11') à disposer sur une surface extérieure de la paroi latérale (6) et au moins une partie de retenue (12, 13) faisant saillie de la partie de délimitation (11') vers l'intérieur.

4. Aérateur (1) selon la revendication 3, **caractérisé en ce que** l'ailette de retenue (10) présente une partie de retenue supérieure (12) et une partie de retenue inférieure (13).

5. Aérateur (1) selon la revendication 4, **caractérisé en ce que** la partie de retenue inférieure (13) est reliée à la partie de fixation (11) par l'intermédiaire d'une partie de liaison (14) étendue de préférence sensiblement parallèlement à la partie de délimitation (11').

6. Aérateur (1) selon la revendication 4, **caractérisé en ce que** la partie de retenue inférieure (13) est réalisée sous la forme d'une zone de la partie de fixation (11).

7. Aérateur (1) selon l'une quelconque des revendications 1 à 6, **caractérisé en ce que** l'élément de montage (9) est formé par une pièce profilée d'une seule pièce.

8. Aérateur (1) selon l'une quelconque des revendications 1 à 7, **caractérisé en ce que** l'élément de préhension (15) et l'ailette de retenue (10) sont réalisés d'une seule pièce.

9. Aérateur (1) selon l'une quelconque des revendications 1 à 8, **caractérisé en ce que** l'élément de préhension (15) est disposé dans le même plan que la partie de délimitation (11') de l'ailette de retenue (10).

10. Aérateur (1) selon l'une quelconque des revendications 1 à 9, **caractérisé en ce que** l'élément de préhension (15) présente un évidement (16), lequel est formé de préférence de manière correspondante à la partie de retenue supérieure (12).

11. Aérateur (1) selon l'une quelconque des revendications 1 à 10, **caractérisé en ce que** l'élément de préhension (15) présente une ligne de coupe (20) sensiblement rectiligne, dans lequel une partie de l'élément de préhension (15) adjacente à celle-ci est courbée vers l'intérieur pour réaliser la partie de retenue supérieure (12), dans lequel la partie de retenue supérieure (12), dans l'état monté, s'applique par l'intermédiaire de son bord inférieur (21) contre la face supérieure de la paroi latérale (6) de l'élément d'aération (2).

12. Aérateur (1) selon l'une quelconque des revendications 1 à 8, **caractérisé en ce que** l'élément de préhension (15) est de préférence coudé vers l'extérieur à partir de la partie de délimitation (11') de l'ailette de retenue (10).

13. Aérateur (1) selon l'une quelconque des revendications 1 à 12, **caractérisé en ce que** la partie de fixation (11) présente une, de préférence une seule ouverture de fixation (9') pour la disposition d'un élément de fixation (9").

14. Aérateur (1) selon l'une quelconque des revendications 1 à 13, **caractérisé en ce que** le corps de base (3) de l'élément d'aération (2) est disposé entre les ailettes de retenue (10) de l'élément de montage (9) de manière mobile dans la direction longitudinale.

15. Aérateur (1) selon l'une quelconque des revendications 1 à 14, **caractérisé en ce que** le corps de base (3) présente dans une zone de bord latérale une rainure de serrage (7) pour le serrage à bloc d'un élément membrane (5) avec des ouvertures de passage pour le gaz, dans lequel la rainure de serrage (7) est délimitée côté extérieur par la paroi latérale (6).
